# EUROPÄISCHE PATENTSCHRIFT

(11) **EP 1 702 954 B1**
(45) Veröffentlichungstag und Bekanntmachung des Hinweises auf die Patenterteilung: **04.08.2010**
(21) Anmeldenummer: 06003664.7
(22) Anmeldetag: 23.02.2006
(51) Int. Cl.: C08L 33/00

(54) **WÄSSRIGE COPOLYMERISATDISPERSIONEN MIT REAKTIVVERDÜNNER**
AQUEOUS COPOLYMER DISPERSIONS WITH REACTIVE DILUENT
DISPERSIONS AQUEUSES DE COPOLYMÈRES AVEC UN DILUANT RÉACTIF

(30) Priorität: 09.03.2005 DE 102005010694
(43) Veröffentlichungstag der Anmeldung: 20.09.2006
(73) Patentinhaber: Bayer MaterialScience AG, 51368 Leverkusen (DE)
(72) Erfinder: Hofacker, Steffen, Dr., 51519 Odenthal (DE); Mechtel, Markus, Dr., 51467 Bergisch Gladbach (DE); Münzmay, Thomas, Dr., 41539 Dormagen (DE); Yuva, Nusret, Dr., 51399 Burscheid (DE); Gertzmann, Rolf, Dr., 51377 Leverkusen (DE)

(56) Entgegenhaltungen:
- EP-A- 0 758 007
- EP-A- 0 947 557
- EP-A- 1 657 270
- EP-A- 1 657 271

## Beschreibung

Die Erfindung betrifft wässrige Copolymerisatdispersionen mit niedrigem Lösemittelgehalt auf Basis von hydroxyfunktionellen Copolymerisaten, ein Verfahren zu deren Herstellung, Bindemittelkombinationen auf dieser Basis und die Verwendung der Bindemittel für kratzfeste Beschichtungen.

Es ist bekannt in Beschichtungssystemen (z.B. beschrieben in der DE-A 3 209 421, EP-A 95 263, EP-A 105 293, EP-A 133 949, EP-A 288 763) wasserverdünnbare Bindemittel auf Copolymerbasis einzusetzen. Diese enthalten jedoch in der Regel Emulgatoren zur Stabilisierung und/oder größere Anteile organischer Colösemittel.

Die Verwendung größerer Mengen organischer Lösemittel ist aus ökologischen Gründen unerwünscht. Sie ist jedoch nicht zu vermeiden, um bei der Polymerisatherstellung ein ausreichende Rührbarkeit und Wärmeabfuhr der Reaktionsmischung sowie einen gewissen Mindestfüllgrad des Reaktors zu gewährleisten. Zusätzlich führen organische Lösemittel in wässrigen Beschichtungsmitteln zu vorteilhaften Effekten wie verbesserter Lagerstabilität, Pigmentbenetzung, Filmoptik und Verlauf.

Eine nachträgliche Reduzierung von verfahrensbedingt enthaltener Lösemittel aus Copolymerisaten oder -dispersionen ist mit hohem apparativen und energetischen Aufwand und damit auch hohen Kosten verbunden, so dass Bedarf an wässrigen Polymerisatdispersionen besteht, bei deren Herstellung auf die Verwendung organischer Lösemittel weitgehend verzichtet werden kann, ohne dass eine Verschlechterung der anwendungstechnischen Eigenschaften auftritt.

Copolymerisatdispersionen, welche durch eine chemische Reaktion, z.B. mit einem Aminoplastharz, einem blockierten Polyisocyanat oder einem Polyisocyanat ausgehärtet werden sollen, müssen eine bestimmte Menge an reaktiven Gruppen, z.B. Hydroxygruppen, enthalten. Diese Gruppen werden in der Regel durch die Mitverwendung hydroxyfunktioneller (Meth)acrylsäureester bei der Copolymerisation in das Copolymer eingebracht. Diese Rohstoffe sind allerdings im Vergleich zu den nichtfunktionellen (Meth)acrylsäureestern oder auch zu Styrol sehr teuer. Zudem müssen häufig auch größere Mengen dieser Rohstoffe im Vergleich zu organisch gelösten Copolymerisaten eingesetzt werden, um durch eine größere Vernetzungsdichte die Hydrophilie der Lackfilme zu kompensieren.

Einen Weg zur Herstellung hydroxyfunktioneller Copolymerisatsekundärdispersionen, der den Einsatz von Lösungsmitteln bei der Polymerisation weitgehend vermeidet, wird in der EP-A 0 758 007 offenbart. Dort werden die üblicherweise eingesetzten Lösemittel ganz oder teilweise durch hydroxyfunktionelle Polyether ersetzt. Die hydroxyfunktionellen Polyether verbleiben als Reaktivverdünner in der Sekundärdispersion und reagieren bei der späteren Vernetzung mit Isocyanaten oder blockierten Isocyanaten unter Urethanbildung mit. Sie tragen damit nicht zum VOC bei. Es zeigte sich aber, dass Polyetheranteile im Lack in einigen Anwendungsbereichen zu geringen Beständigkeiten, beispielsweise zu einer geringen Kratzfestigkeit, führen.

Es wurde nun gefunden, dass wässrige Copolymerisatdispersionen mit niedrigem Lösemittelgehalt und hohem Beständigkeitsniveau der Lackfilme, insbesondere mit sehr guter Kratz- und Säurefestigkeit, basierend auf hydroxyfunktionellen Copolymerisaten hergestellt werden können, wenn hydroxyfunktionelle Polycarbonate als Reaktivverdünner eingesetzt werden.

Gegenstand der Erfindung sind daher wässrige Copolymerisatdispersionen enthaltend
A) ein oder mehrere hydroxyfunktionelle Copolymerisate aufgebaut aus
   a) OH-gruppenfreien (Meth)acrylsäureestern und/oder Vinylaromaten,
   b) hydroxyfunktionellen (Meth)acrylsäureestern,
   c) ionischen und/oder potentiell ionischen, zur radikalischen Copolymerisation befähigten Monomeren sowie
   d) gegebenenfalls weiteren, von den Verbindungen der Komponenten a) - c) verschiedenen, zur radikalischen Copolymerisation befähigten Monomeren und
B) mindestens ein hydroxyfunktionelles Polycarbonatpolyol als Reaktivverdünner.

Ebenfalls Gegenstand der vorliegenden Erfindung ist ein Verfahren zur Herstellung der erfindungsgemäßen Copolymerisatdispersionen dadurch gekennzeichnet, dass mindestens ein hydroxyfunktionelles Polycarbonatpolyol als Reaktivverdünner B) vorgelegt wird und eine oder mehrere Monomermischungen enthaltend
a) OH-gruppenfreie (Meth)acrylsäureester und/oder Vinylaromaten,
b) hydroxyfunktionelle (Meth)acrylsäureester,
c) ionische und/oder potentiell ionische, zur radikalischen Copolymerisation befähigte Monomere sowie
d) gegebenenfalls weitere, von den Verbindungen der Komponenten a) - c) verschiedene zur radikalischen Copolymerisation befähigte Monomere radikalisch polymerisiert werden und das so erhaltene Copolymerisat anschließend vor oder nach Zugabe eines Neutralisationsmittels in Wasser dispergiert wird.

Ferner ist ein weiterer Gegenstand der Erfindung die Verwendung der erfindungsgemäßen wässrigen Copolymerisatdispersionen zur Herstellung kratzfeste Lacke und Beschichtungen.

Als Monomere der Komponente a) werden Acrylate und Methacrylate (im folgenden als (Meth)-Acrylate bezeichnet) mit 1 bis 18 Kohlenstoffatomen im Alkoholteil der Estergruppe eingesetzt. Dieser Alkoholteil kann linear-, verzweigt- oder cycloaliphatisch sein.

Beispielsweise geeignet als Monomere der Komponente a) sind Methyl-, Ethyl-, n-Propyl-, n-Butyl-, Isopropyl-, Isobutyl-, t-Butyl-, die isomeren Pentyl-, Hexyl-, 2-Ethylhexyl-, Octyl-, Dodecyl-, Hexadecyl-, Octadecyl- oder Cyclohexyl-, Trimethylcyclohexyl- und Isobomyl-(meth)acrylate oder Acetoacetoxyethylmethacrylat. Geeignete Vinylaromaten sind insbesondere Styrol, gegebenenfalls substituierte Styrole und Vinyltoluole.

Ebenfalls möglich ist der Einsatz beliebiger Mischungen der vorstehend genannten Verbindungen in der Komponente a).

In Komponente b) können ethylenisch ungesättigte, OH-gruppenhaltige Monomere eingesetzt werden, wie beispielsweise Hydroxyalkylester ungesättigter Carbonsäuren, bevorzugt Hydroxyalkyl(meth)acrylate mit 2 bis 12, bevorzugt 2 bis 6 Kohlenstoffatomen im Hydroxyalkylrest.

Beispiele derartiger Verbindungen sind 2-Hydroxyethyl(meth)acrylat, die isomeren Hydroxypropyl(meth)acrylate, 2-, 3- und 4-Hydroxybutyl(meth)acrylate sowie die isomeren Hydroxyhexyl-(meth)acrylate.

Unter (Meth)-Acrylaten im Rahmen der vorliegenden Erfindung sind stets sowohl die betreffenden Acrylate als auch Methacrylate zu verstehen.

Als ionische und/oder potentiell ionische, zur radikalischen Copolymerisation befähigte Monomeren der Komponente c) können olefinisch ungesättigte Monomere mit Carbonsäure- oder Carbonsäureanhydrid-Gruppen, wie z.B. Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester eingesetzt werden, bevorzugt sind Acrylsäure und/oder Methacrylsäure.

Ferner geeignet als Verbindungen der Komponente c) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben, bevorzugt ist 2-Acrylamido-2-methylpropansulfonsäure.

Optional können auch weitere zur radikalischen Copolymerisation befähigte Monomere als Verbindungen der Komponente d) eingesetzt werden. Dies können beispielsweise Derivate der Acryl- oder Methacrylsäure wie Acrylamid, Methacrylamid, Acrylnitril, und Methacrylnitril weiterhin Vinylether und Vinylacetate sein. Als weitere gegebenenfalls einzusetzende Komponenten d) kommen di- oder höher-funktionelle (Meth)acrylatmonomere und/oder Vinylmonomere, wie z.B. Hexandioldi(meth)acrylat oder Divinylbenzol in Frage. Ebenfalls in d) können mit Alkylenoxiden modifizierte oder kettenverlängerte, polymerisierbare hydroxyfunktionelle Monomere mit einem zahlenrnittleren Molekulargewicht ≤ 3 000 g/mol, bevorzugt≤ 500 g/mol eingesetzt werden. Als Alkylenoxide kommen hierfür bevorzugt Ethylen-, Propylen- oder Butylenoxid einzeln oder in Mischungen zum Einsatz.

Weitere geeignete Komponenten d) sind Vinylester beispielsweise der Versaticsäuren, welche unter der Bezeichnung VEOVA™ 9, 10 und 11 (Fa. Resolution Performance Products) im Handel erhältlich sind. Dabei handelt es sich um Vinylester mit einer hoch verzweigten Struktur der allgemeinen Formel (I) 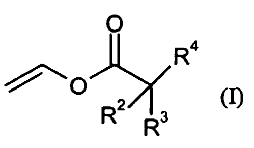 wobei R² und R³ verzweigte Alkyl-Gruppen sind, enthaltend zusammen 6, 7 oder 8 Kohlenstoffatome für VEOVA 9, 10 und 11 und R⁴ gleich Methyl ist.

Die Glasübergangstemperaturen (Tg) der Homopolymerisate der VEOVA-Reihe werden mit 70°C (VEOVA 9), -3°C (VEOVA 10) und mit -40°C (VEOVA 11) angegeben.

Weitere als Komponente d) einzusetzende Monomere sind Alkoxypolyethylen- oder Alkoxypolypropylenglykol(meth)acrylsäureester, wie sie formal durch Veresterung von auf monofunktionellen Alkoholen wie beispielsweise Methanol, Ethanol, (i-)Propanol oder einem der Isomeren des Butanol gestarteten Ethylenoxid- oder Propylenoxidpolyethern mit Acryl- oder Methacrylsäure zugänglich sind. Bevorzugt sind Alkoxypolyethylenglykol-(meth)acrylsäureester.

Als hydroxyfunktionelle Polycarbonatpolyole B) kommen bevorzugt solche in Betracht, die durch Umsetzung von einfachen Diolen wie z.B. 1,4-Butandiol, 1,6-Hexandiol, Di-, Tri- oder Tetraethylenglykol, Di-, Tri- oder Tetrapropylenglykol, 3-Methyl-1,5-pentandiol oder 4,4'-Dimethylolcyclohexan und/oder Mischungen daraus mit Diarylcarbonaten, z.B. Diphenylcarbonat oder Dialkylcarbonaten wie Dimethylcarbonat, Diethylcarbonat, Alkylencarbonaten wie z.B. Ethylencarbonat oder Propylencarbonat oder Phosgen hergestellt werden können. Gegebenenfalls können auch höherfunktionelle, einfache Polyole wie Trimethylolpropan, Glyzerin oder Pentaerythrit in untergeordneter Menge mitverwendet werden. Die erfindungsgemäß einzusetzenden hydroxyfunktionellen Polycarbonatpolyole B) haben eine mittlere Hydroxylfunktionalität von 1,6 bis 6, bevorzugt, 1,8 bis 3 und besonders bevorzugt 1,9 bis 2,3 und ein zahlenmittleres Molekulargewicht von 240 bis 5000, bevorzugt von 500 bis 3000, besonders bevorzugt von 700 bis 1500 Da. Die Herstellung der als Komponente B) geeigneten Polycarbonatpolyole erfolgt bevorzugt nach dem in EP 1 404 740 B1 (S. 6 - 8, Beispiele 1-6) und EP 1 477 508 Al (S. 5, Beispiel 3) beschriebenen Herstellverfahren.

Besonders bevorzugte Komponenten B) basieren auf 1,4-Butandiol, 1,6-Hexandiol oder 3-Methyl-1,5-pentandiol bzw. Gemischen der beiden vorgenannten Diolen und haben eine mittlere Hydroxylfunktionalität von 1,9 bis 2,05.

Die Menge der Komponente B) in Bezug auf die Summe der Komponenten A) und B) beträgt typischerweise 5 bis 60 Gew.-%, bevorzugt 10 bis 40 Gew.-% und besonders bevorzugt 15 bis 30 Gew.-%.

Die Vorgehensweise zur Polymerisation der ungesättigten Monomere ist dem Fachmann an sich vertraut. Typischerweise werden dazu in einem Reaktionsgefäß der Reaktivverdünner B) vorgelegt und die ungesättigten Monomere unter Einsatz eines Radikalinitiators polymerisiert.

Gegebenenfalls können zusätzliche organische Lösemittel in untergeordneter Menge zum Einsatz kommen. Geeignete Hilfslösemittel sind beliebige in der Lacktechnologie bekannte Lösemittel, wie z.B. Alkohole, Ether, Ethergruppen-haltige Alkohole, Ester, Ketone oder unpolare Kohlenwasserstoffe bzw. Gemische dieser Lösemittel. Die Lösemittel werden in solchen Mengen eingesetzt, dass ihr Gehalt in der fertigen Dispersion 0 bis 5 Gew.-% beträgt. Falls erforderlich können die eingesetzten Lösemittel durch eine Destillation wieder teilweise entfernt werden.

Die Copolymerisation wird im Allgemeinen bei 40 bis 200°C, bevorzugt bei 60 bis 180°C, besonders bevorzugt bei 80 bis 160°C durchgeführt.

Als Initiatoren für die Polymerisationsreaktion eignen sich z. B. organische Peroxide wie Di-tert.-Butylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der oben genannten Art eingesetzt werden.

In einer bevorzugten Ausführungsform des Verfahren erfolgt eine zweistufige Zugabe und Polymerisation von ungesättigten Monomeren der vorstehend genannten Art in Anwesenheit der Komponente B). Dabei wird in einem ersten Schritt (I) ein hydroxyfunktionelles Copolymerisat mit einer OH-Zahl von 12 bis 200, bevorzugt 15 bis 190, besonders bevorzugt 100 bis 165 mg KOH/g Feststoff und einer Säurezahl von 0 bis 50, bevorzugt 0 bis 20, besonders bevorzugt 0 bis 15 mg KOH/g Feststoff aus 55 bis 90 Gew.-% Komponente a), 2,5 bis 50 Gew.-% Komponente b), 0 bis 6,5 Gew.-% Komponente c) und 0 bis 42,5 Gew.-% Komponente d) hergestellt. In einem anschließenden Schritt (II) wird in der aus Schritt (I) erhaltenen Reaktionsmischung ein weiteres Polymerisat aus Monomeren der Komponenten a) - d) hergestellt, wobei dieses Polymerisat eine OH-Zahl von 20 bis 200, bevorzugt 20 bis 190, besonders bevorzugt 50 bis 165 mg KOH/g Feststoff und eine Säurezahl von 50 bis 200, bevorzugt 75 bis 185, besonders bevorzugt 77 bis 150 mg KOH/g Feststoff aufweist. Das Polymerisat aus Schritt (II) wird dabei aus 45 bis 80 Gew.-% Komponente a), 5 bis 50 Gew.-% Komponente b), 6,5 bis 25 Gew.-% Komponente c) und 0 bis 43,5 Gew.-% Komponente d) hergestellt. Die %-Angaben der Polymerisatzusammensetzung addieren sich je Polymerisat zu 100 Gew.-% auf. Die Monomermengen der beiden Polymerisatherstellungen sind dabei so zu wählen, dass das Massenverhältnis des Polymerisats aus Schritt (I) zu dem aus Schritt (II) 10:1 bis 1:2, bevorzugt 6:1 bis 2:1 beträgt.

Die Mengenverhältnisse der Aufbaukomponenten a) bis d) werden typischerweise so gewählt, dass das Copolymerisat eine OH-Zahl von 12,5 bis 200 mg KOH/g, bevorzugt von 15 bis 190 mg KOH/g und besonders bevorzugt von 95 bis 165 mg KOH/g Feststoff und eine Säurezahl von 4,5 bis 150 mg KOH/g, bevorzugt 7 bis 75, besonders bevorzugt von 10 bis 60 mg KOH/g Feststoff aufweist. Das resultierende Polymerisat aus Schritt (I) und (II) wird aus 54 bis 83 Gew.-%, bevorzugt 53,5 bis 87 Gew.-% Komponente a), 2,5 bis 50 Gew.-%, bevorzugt 3 bis 50 Gew.-% Komponente b), 0,6 bis 19, bevorzugt 1 bis 12,5 Gew.-% Komponente c) und 0 bis 43,5, bevorzugt 0 bis 43 Gew.-% Komponente d) hergestellt.

Statt eines mehrstufigen Polymerisationsverfahren ist es ebenfalls möglich den Prozess kontinuierlich (Gradientenpolymerisation) durchzuführen, d.h. es wird eine Monomermischung mit sich gemäß der Zusammensetzung des oder der Copolymerisate A) ändernder Zusammensetzung zugegeben, wobei bevorzugt die hydrophilen Monomeranteile gemäß der Komponenten c) und gegebenenfalls d) gegen Ende des Zulaufs höher sind als zu Beginn.

Die nach dem erfindungsgemäßen Verfahren erhältlichen Copolymerisate weisen zahlenmittlere Molekulargewichte Mₙ von 500 bis 30 000 g/mol, bevorzugt 1 000 bis 15 000 g/mol, besonders bevorzugt 1 500 bis 10 000 g/mol auf.

Vor, während oder nach der Dispergierung der hydroxyfunktionellen Copolymerisate A) in Wasser werden die vorhandenen Säuregruppen zumindest anteilig durch Zugabe geeigneter Neutralisationsmittel in ihre Salzform überführt. Als Neutralisationsmittel geeignet sind organische Amine oder wasserlösliche anorganische Basen, wie z.B. lösliche Metallhydroxide, -carbonate oder -hydrogencarbonate.

Beispiele für geeignete Amine sind N-Methylmorpholin, Triethylamin, Ethyldiisopropylamin, N,N-Dimethylethanolamin, N,N-Dimethylisopropanolamin, N-Methyldiethanolamin, Diethylethanolamin, Triethanolamin, Butanolamin, Morpholin, 2-Aminomethyl-2-methyl-propanol oder Isophorondiamin. In Mischungen kann auch anteilig Ammoniak eingesetzt werden. Besonders bevorzugt sind Triethanolamin, N,N-Dimethylethanolamin und Ethyldiisopropylamin.

Die Neutralisationsmittel werden in solchen Mengen zugesetzt, dass in Summe ein theoretischer Neutralisationsgrad [der Säuregruppen] von 40 bis 150 %, bevorzugt 60 bis 120 % vorliegt. Der Neutralisationsgrad versteht sich dabei als Verhältnis von zugesetzten basischen Gruppen der Neutralisationskomponente zu Säurefunktionen des Copolymerisats. Der pH-Wert der erfindungsgemäßen wässrigen Bindemitteldispersion beträgt 6 bis 10, bevorzugt 6,5 bis 9.

Die erfindungsgemäßen wässrigen Copolymerisatdispersionen weisen einen Festkörpergehalt von 25 bis 70 Gew.-%, bevorzugt 35 bis 60 Gew.-%, besonders bevorzugt von 40 bis 55 Gew.-% auf, sowie einen Gehalt an organischen Lösemitteln von 0 bis 5 Gew.-%, bevorzugt 0,5 bis 3,5 Gew.-% auf.

Die erfindungsgemäßen Copolymerisatdispersionen können zu wässrigen Beschichtungsmitteln verarbeitet werden. Durch Kombination mit Vernetzern können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfmdung sind dabei Überzugsmittel zu verstehen, bei denen Bindemittelkomponente und Vemetzerkomponente zusammen gelagert werden können, ohne dass eine Vemetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Gegenstand der vorliegenden Erfindung sind daher auch wässrige Beschichtungsmittel enthaltend
i) ein oder mehrere erfindungsgemäße wässrige Copolymerisatdispersionen sowie
ii) mindestens einen OH-gruppenreaktiven Vernetzer.

Geeignete OH-gruppenreaktive Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer Polyisocyanate eingesetzt. Solche Polyisocyanate weisen typischerweise 2 oder mehr Isocyanatgruppen pro Molekül auf und basieren beispielsweise auf Isophorondiisocyanat, Hexamethylendiisocyanat, 1,4-Diisocyanatocyclohexan, Bis-(4-iso-cyanato-cyclohexan)-methan, 1,3-Diisocyanatobenzol, Triisocyanatononan oder den isomeren 2,4- und 2,6-Toluylendiisocyanaten (TDI) und können ferner Urethan-, Isocyanurat und/oder Biuretgruppen aufweisen. Gegebenenfalls können die Polyisocyanate auch blockiert sein.

Besonders bevorzugt ist der Einsatz niedrigviskoser Polyisocyanate der vorstehend genannten Art auf Basis aliphatischer oder cycloaliphatischer Isocyanate. Gegebenenfalls können diese auch hydrophiliert sein.

Die als Vernetzer eingesetzten Polyisocyanate weisen bei 23°C im Allgemeinen eine Viskosität von 10 bis 5 000 mPas auf und können, falls zur Viskositätseinstellung gewünscht, in Abmischung mit geringen Mengen an inerten Lösemitteln zum Einsatz gelangen.

Die erfindungsgemäßen Copolymerisate sind im Allgemeinen ausreichend hydrophil, so dass auch hydrophobe Vernetzerharze ohne zusätzliche Emulgatoren dispergiert werden können. Eine Verwendung externer Emulgatoren ist dadurch jedoch nicht ausgeschlossen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z. 55 bis S. 4, Z. 5) beschrieben.

Gut geeignet sind auch die in der EP-A 959 087 (S. 3, Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2, Z. 66 bis S. 3, Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 (S. 3, Z. 13 bis 33) beschrieben sind.

Prinzipiell ist natürlich auch der Einsatz von Mischungen verschiedener Vernetzerharze möglich.

Vor, während oder nach der Herstellung der erfindungsgemäßen wässrigen Copolymerisatdispersion können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Diese Hilfs- und Zusatzmittel können auch dem Beschichtungsmittel, enthaltend die erfindungsgemäßen wässrigen Copolymerisatdispersionen, zugesetzt werden.

Wässrige Beschichtungsmittel, enthaltend die erfindungsgemäßen wässrigen Copolymerisatdispersionen eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Die wässrigen Beschichtungsmittel, enthaltend die erfindungsgemäßen wässrigen Copolymerisatdispersionen, sind zur Herstellung von lösemittelarmen Grundierungen, Füllen, pigmentierter oder transparenter Decklacke, Klarlacke und Hochglanzlacke sowie Einschichtlacken, z.B. im Bereich der Industrielackierung, Automobilerst- und Reparaturlackierung geeignet. Besonders geeignet sind die erfindungsgemäßen wässrigen Copolymerisatdispersionen zur Herstellung wässriger Klarlacke für die Automobilerstlackierung, bei der besonders hohe Beständigkeitseigenschaften wie Kratz- und Chemikalienbeständigkeit erforderlich sind.

Gegenstand der Erfindung ist auch ein Verfahren zur Herstellung von Beschichtungen, dadurch gekennzeichnet, dass auf ein Substrat ein Beschichtungsmittel, enthaltend die erfindungsgemäßen Copolymerisatdispersionen, appliziert und anschließend ausgehärtet wird. Die so hergestellten Beschichtungen weisen in der Regel einen Restglanz nach reflow von mehr als 90 % auf.

Die Aushärtung der erfindungsgemäßen Beschichtungsmittel erfolgt dabei typischerweise bei Temperaturen von 0 bis 180°C, bevorzugt von 18 bis 160°C, besonders bevorzugt von 40 bis 140°C.

Die Herstellung der Beschichtungen kann nach den unterschiedlichen Spritzverfahren wie beispielsweise Luftdruck-, Airless- oder Elektrostatik-Spritzverfahren unter Verwendung von Einoder gegebenenfalls Zweikomponenten-Spritzanlagen erfolgen. Die Lacke und Beschichtungsmittel, enthaltend die erfindungsgemäßen wässrigen, hydroxyfunktionellen Copolymerisatdispersionen, können jedoch auch nach anderen Methoden, beispielsweise durch Streichen, Rollen oder Rakeln appliziert werden.

### Beispiele:

Soweit nicht abweichend angegeben beziehen sich alle Prozentangaben auf Gewichtsprozent.

Viskositätsmessungen wurden mit einem Kegel-Platte-Viskosimeter Physica Viscolab® LC3 ISO der Firma Physica, Stuttgart, Deutschland nach DIN 53019 bei einem Schergefälle von 40 S⁻¹ durchgeführt.

Die Bestimmung der mittleren Teilchengröße erfolgte mittels Laser-Korrelations-Spektroskopie (Zetasizer® 1000, Malvern Instruments, Herrenberg, Deutschland).

Die angegebenen OH-Zahlen wurden ausgehend von den eingesetzten Monomeren berechnet.

Säurezahlen: Bestimmungsmethode = DIN ISO 3682

### Beispiel 1

In einem 4 Mehrhalskolben mit Rührwerk wurden 469 g 1,6-Hexandiol und 454 g ε-Caprolacton, sowie 0,2 g Titantetraisopropylat vorgelegt und unter einem Inertgasstrom (Stickstoff) mittels Ölbad auf 110°C aufgeheizt. Danach wurde mittels einer Pumpe 401 g Dimethylcarbonat binnen 15 Minuten zum Reaktionsgemisch zugegeben und danach weitere 24 Stunden unter Rückfluss gehalten. Danach wurde über eine Destillationskolonne ein Gemisch aus Dimethylcarbonat und Methanol aus dem Reaktionsgemisch bei Normaldruck entfernt, wobei die Ölbad-Temperatur innerhalb von 7 Stunden kontinuierlich von 110°C auf 150°C erhöht wurde. Anschließend erfolgte eine Senkung der Ölbad-Temperatur auf 100°C sowie einer Druckverminderung auf 20 mbar (absolut) bei gleichzeitiger Entfernung von Methanol und restlichem Dimethylcarbonat. Im Anschluss daran wurde die Ölbad-Temperatur innerhalb von 5 Stunden auf 180°C erhöht und dort 2 Stunden gehalten. Anschließend wurde das Reaktionsgemisch auf Raumtemperatur abgekühlt und mit 0,2 g Dibutylphosphat versetzt. Es wurde ein Polycarbonatesterdiol mit einer Hydroxylzahl von 113 mg KOH /g erhalten.

### Beispiel 2

Gleiches Vorgehen wie in Beispiel 1 mit dem Unterschied, dass 861 g 1,6-Hexandiol und 0,2 g Ytterbium(III)acetyläcetonat vorgelegt und 826 g Dimethylcarbonat zugepumpt wurden. Ein Zusatz von 0,2 g Dibutylphosphat wie in Beispiel 1 erfolgte nicht.

Es wurde ein Polycarbonatdiol mit einer Hydroxylzahl von 109 mg KOH /g erhalten.

### Beispiel 3

Gleiches Vorgehen wie in Beispiel 1 mit dem Unterschied, dass 616 g 1,6-Hexandiol, 1408 g 1,4-Butandiol und 0,2 g Ytterbium(III)acetylacetonat vorgelegt und 2477 g Dimethylcarbonat zugepumpt wurden. Ein Zusatz von 0,2 g Dibutylphosphat wie in Beispiel 1 erfolgte nicht.

Es wurde ein Polycarbonatdiols mit einer Hydroxylzahl von 113 mg KOH /g erhalten.

### Beispiel 4

In einem 60 1 Druckreaktor mit Destillationsaufsatz, Rührer und Vorlage wurden 34092 g 3-Methyl-1,5-Pentandiol mit 8,0 g Ytterbium(III)acetylacetonat sowie 10223 g Dimethylcarbonat bei 80°C vorgelegt. Anschließend wurde unter Stickstoffatmosphäre das Reaktionsgemisch in 2 h auf 150°C aufgeheizt und dort unter Rühren und Rückfluss 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4h kontinuierlich um insgesamt 2,2 bar gesenkt wurde. Anschließend wurde der Destillationsvorgang beendet und weitere 10223 g Dimethylcarbonat bei 150°C zu dem Reaktionsgemisch zugepumpt und dort unter Rühren und Rückfluss 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 7147 g Dimethylcarbonat bei 150°C zu dem Reaktionsgemisch zugepumpt und dort unter Rühren und Rückfluss 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluss daran wurde das Reaktionsgemisch innerhalb von 2 h auf 180°C erhitzt und bei dieser Temperatur 2 h unter Rühren gehalten. Daran anschließend wurde die Temperatur auf 130°C reduziert und ein Stickstoffstrom (51/h) durch das Reaktionsgemisch hindurchgeleitet, während der Druck auf 20 mbar abgesenkt wurde. Danach wurde die Temperatur binnen 4 h auf 180°C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, erhielt man ein farbloses, flüssiges Oligocarbonatdiol mit folgenden Kennzahlen:

Mₙ = 675 g/mol; OH-Zahl = 166,0 mg KOH / g; Viskosität: 6940 mPas bei 23°C und D:16.

### Beispiel 5

In einem 10 1-Reaktionsgefäß mit Rühr-, Kühl- und Heizvorrichtung wurden 600 g Polycarbonatdiol gemäß Beispiel 1 vorgelegt und auf 143°C aufgeheizt. Bei dieser Temperatur wurde eine Lösung aus 7,75 g Di-tert.-butylperoxid in 7,75 g Dowanol® PnB innerhalb 20 min zugetropft. Im Anschluss daran wurde eine Monomermischung aus 81,5 g 2-Ethylhexylacrylat, 566,5 g Hydroxyethylmethacrylat, 435 g Butylmethacrylat, 567,5 g Isobornylmethacrylat und 135 g Styrol sowie parallel dazu eine Lösung von 27,75 g Di-tert.-butylperoxid in 34,25 g Dowanol® PnB innerhalb von 4,5 Stunden gleichmäßig zudosiert. Man hielt ca. 20 Minuten bei dieser Temperatur. Im Anschluss daran wurde eine Monomermischung aus 122,5 g Methylmethacrylat, 172,75 g Hydroxyethylmethacrylat, 96 g Butylacrylat und 46,25 g Acrylsäure sowie parallel dazu eine Lösung von 7,75 g Di-tert.-butylperoxid in 25 g Dowanol® PnB innerhalb von 1,5 Stunden gleichmäßig zudosiert. Anschließend 1 Stunde bei 143°C nachgerührt, dann auf 100°C abgekühlt und 29,25 g N,N-Dimethylethanolamin zugegeben. Nach 30 Minuten Homogenisieren wurde innerhalb von 2 Stunden bei 80°C mit 3400 g Wasser dispergiert. Es wurde eine Copolymerisat-Dispersion mit folgenden Daten erhalten:

| | |
|---|---|
| OH-Gehalt (Festkörper, theoretisch berechnet) | 4,3 % |
| Säurezahl (Festkörper) | 14 mg KOH/g |
| Festkörpergehalt | 45,0 % |
| Viskosität | 850 mPas/23°C |
| pH-Wert (10 %ig in Wasser) | 8,5 |
| Neutralisationsgrad | 105 % |
| Mittlere Teilchengröße | 105 nm |
| Kosolvens | 1,1 Gew.-% |

### Beispiel 6

In einem 10 1-Reaktionsgefäß mit Rühr-, Kühl- und Heizvorrichtung wurden 600 g Polycarbonatdiol gemäß Beispiel 2 vorgelegt und auf 143°C aufgeheizt. Bei dieser Temperatur wurde eine Lösung aus 7,75 g Di-tert.-butylperoxid in 7,75 g Dowanol® PnB innerhalb 20 min zugetropft. Im Anschluss daran wurde eine Monomermischung aus 81,5 g 2-Ethylhexylacrylat, 566,5 g Hydroxyethylmethacrylat, 435 g Butylmethacrylat, 567,5 g Isobornylmethacrylat und 135 g Styrol sowie parallel dazu eine Lösung von 27,75 g Di-tert.-butylperoxid in 34,25 g Dowanol® PnB innerhalb von 4,5 Stunden gleichmäßig zudosiert. Die Reaktionsmischung wurde ca. 20 Minuten bei dieser Temperatur gehalten. Im Anschluss daran wurde eine Monomermischung aus 122,5 g Methylmethacrylat, 172,75 g Hydroxyethylmethacrylat, 96 g Butylacrylat und 46,25 g Acrylsäure sowie parallel dazu eine Lösung von 7,75 g Di-tert.-butylperoxid in 25 g Dowanol® PnB innerhalb von 1,5 Stunden gleichmäßig zudosiert. Anschließend wurde 1 Stunde bei 143°C nachgerührt, dann auf 100°C abgekühlt und 29,25 g N,N-Dimethylethanolamin zugegeben. Nach 30 Minuten Homogenisieren wurde innerhalb von 2 Stunden bei 80°C mit 3625 g Wasser dispergiert. Es wurde eine Copolymerisat-Dispersion mit folgenden Daten erhalten:

| | |
|---|---|
| OH-Gehalt (Festkörper; theoretisch berechnet) | 4,3 % |
| Säurezahl (Festkörper) | 15 mg KOH/g |
| Festkörpergehalt | 43,5 % |
| Viskosität | 400 mPas/23°C |
| pH-Wert (10 %ig in Wasser) | 8,5 |
| Neutralisationsgrad | 105 % |
| Mittlere Teilchengröße | 110 nm |
| Kosolvens | 1,0 Gew.-% |

### Beispiel 7

In einem 6 1-Reaktionsgefäß mit Rühr-, Kühl- und Heizvorrichtung wurden 600 g Polycarbonatdiol gemäß Beispiel 3 vorgelegt und auf 143°C aufgeheizt. Bei dieser Temperatur wurde eine Lösung aus 7,75 g Di-tert.-butylperoxid in 7,75 g Dowanol® PnB innerhalb 20 min zugetropft. Im Anschluss daran wurde eine Monomermischung aus 81,5 g 2-Ethylhexylacrylat, 566,5 g Hydroxyethylmethacrylat, 435 g Butylmethacrylat, 567,5 g Isobornylmethacrylat und 135 g Styrol sowie parallel dazu eine Lösung von 27,75 g Di-tert.-butylperoxid in 34,25 g Dowanol® PnB innerhalb von 4,5 Stunden gleichmäßig zudosiert. Die Reaktionsmischung wurde ca. 20 Minuten bei dieser Temperatur gehalten. Im Anschluss daran wurde eine Monomermischung aus 122,5 g Methylmethacrylat, 172,75 g Hydroxyethylmethacrylat, 96 g Butylacrylat und 46,25 g Acrylsäure sowie parallel dazu eine Lösung von 7,75 g Di-tert.-butylperoxid in 25 g Dowanol® PnB innerhalb von 1,5 Stunden gleichmäßig zudosiert. Anschließend wurde 1 Stunde bei 143°C nachgerührt, dann auf 100°C abgekühlt und 29,25 g N,N-Dimethylethanolamin zugegeben. Nach 30 Minuten Homogenisieren wurde innerhalb von 2 Stunden bei 80°C mit 3625 g Wasser dispergiert. Es wurde eine Copolymerisat-Dispersion mit folgenden Daten erhalten:

| | |
|---|---|
| OH-Gehalt (Festkörper; theoretisch berechnet) | 4,3 % |
| Säurezahl (Festkörper) | 14 mg KOH/g |
| Festkörpergehalt | 43,5 % |
| Viskosität | 2 360 mPas/23°C |
| pH-Wert (10 %ig in Wasser) | 8,5 |
| Neutralisationsgrad | 105 % |
| Mittlere Teilchengröße | 130 nm |
| Kosolvens | 1,1 Gew.-% |

### Beispiel 8

In einem 6 1-Reaktionsgefäß mit Rühr-, Kühl- und Heizvorrichtung wurden 600 g Polycarbonatdiol gemäß Beispiel 4 vorgelegt und auf 143°C aufgeheizt. Bei dieser Temperatur wurde eine Lösung aus 7,75 g Di-tert.-butylperoxid in 7,75 g Dowanol® PnB innerhalb 20 min zugetropft. Im Anschluss daran wurde eine Monomermischung aus 595,25 g Hydroxyethylmethacrylat, 487,75 g Butylmethacrylat, 692,5 g Isobornylmethacrylat und 135 g Styrol sowie parallel dazu eine Lösung von 27,75 g Di-tert.-butylperoxid in 34,25 g Dowanol® PnB innerhalb von 4,5 Stunden gleichmäßig zudosiert. Die Reaktionsmischung wurde ca. 20 Minuten bei dieser Temperatur gehalten. Im Anschluss daran wurde eine Monomermischung aus 102,5 g Methylmethacrylat, 173 g Hydroxyethylmethacrylat, 96 g Butylacrylat und 75 g Acrylsäure sowie parallel dazu eine Lösung von 7,75 g Di-tert.-butylperoxid in 25 g Dowanol® PnB innerhalb von 1,5 Stunden gleichmäßig zudosiert. Anschließend wurde 1 Stunde bei 143°C nachgerührt, dann auf 100°C abgekühlt und 97 g N,N-Dimethylethanolamin zugegeben. Nach 30 Minuten Homogenisieren wurde innerhalb von 2 Stunden bei 80°C mit 3500 g Wasser dispergiert. Es wurde eine Copolymerisat-Dispersion mit folgenden Daten erhalten:

| | |
|---|---|
| OH-Gehalt (Festkörper; theoretisch berechnet) | 4,4 % |
| Säurezahl (Festkörper) | 21 mg KOH/g |
| Festkörpergehalt | 44,5 % |
| Viskosität | 1060 mPas/23°C |
| pH-Wert (10 %ig in Wasser) | 8,5 |
| Neutralisationsgrad | 105 % |
| Mittlere Teilchengröße | 94 nm |
| Kosolvens | 1,0 Gew.-% |

### Beispiel 9: Vergleich (EP-A 0 758 007, Beispiel 1)

In einem 6 1-Reaktionsgefäß mit Rühr-, Kühl- und Heizvorrichtung wurden 116 g Butylglykol und 150 g Desmophen® V218 (Polyether auf Basis von Propylenoxid und Glycerin, OH-Zahl 245 mg KOH/g, Bayer AG Leverkusen, DE) vorgelegt und auf 155°C aufgeheizt. Bei dieser Temperatur wurden 321 g Butylacrylat, 366 g Styrol und 198 g Hydroxyethylmethacrylat innerhalb 2 Stunden zudosiert und parallel dazu eine Lösung aus 17,1 g Di-tert.-butylperoxid in 28,6 g Butylglykol. Im Anschluss daran wurde eine Monomermischung aus 83 g Hydroxyethylmethacrylat, 180 g Butylacrylat, 139 g Styrol und 34 g Acrylsäure innerhalb 1 Stunde zudosiert und parallel dazu 12,9 g Di-tert.-butylperoxid in 21,4 g Butylglykol. Anschließend wurde 2 Stunde bei 150 bis 155°C nachgerührt, dann auf 100°C abgekühlt und 50 g Dimethylethanolamin zugegeben. Nach 30 Minuten Homogenisieren wurde innerhalb von 2 Stunden bei 80°C mit 1980 g Wasser dispergiert. Es wurde eine Copolymerisat-Dispersion mit folgenden Daten erhalten:

| | |
|---|---|
| OH-Gehalt (Festkörper; theoretisch berechnet) | 3,2 % |
| Säurezahl (Festkörper) | 18 mg KOH/g |
| Festkörpergehalt | 40 % |
| Viskosität | 830 mPas/23°C |
| pH-Wert (10 %ig in Wasser) | 9,4 |
| Neutralisationsgrad | 100 % |
| Mittlere Teilchengröße | 51 nm |
| Kosolvens | 4,0 Gew.-% |

### Beispiel 10: Vergleich (EP 947 557 Beispiel 3)

In einem 6 1-Reaktionsgefäß mit Rühr-, Kühl- und Heizvorrichtung wurden 186 g Butylglykol und 186 g Solvent Naphta vorgelegt und auf 145°C aufgeheizt. Bei dieser Temperatur wurde eine Mischung 1) aus 750 g Methylmethacrylat, 125 g Styrol, 445 g Hydroxyethylmethacrylat, 538 g Butylacrylat und 87 g Butylmethacrylat in 3 Stunden und unmittelbar anschließend eine Mischung 2) aus 128 g Methylmethacrylat, 180 g Hydroxyethylmethacrylat, 100 g Butylacrylat und 60 g Acrylsäure in 1,5 Stunden zudosiert. Parallel dazu wurde innerhalb von 5 Stunden eine Lösung von 88 g Di-tert.-butylperoxid in 70 g einer 1:1 Mischung von Butylglykol und Solvent Naphta zudosiert. Anschließend wurde 2 Stunden bei 145°C nachgerührt, dann auf 100°C abgekühlt und 76 g N,N-Dimethylethanolamin zugegeben. Nach 30 Minuten Homogenisieren wurde innerhalb von 2 Stunden bei 80°C mit 2700 g Wasser dispergiert. Es wurde eine Copolymerisat-Dispersion mit folgenden Daten erhalten:

| | |
|---|---|
| OH-Gehalt (Festkörper; theoretisch berechnet) | 3,3% |
| Säurezahl (Festkörper) | 18 mg KOH/g |
| Festkörpergehalt | 43,8 % |
| Viskosität | 1400 mPas/23°C |
| pH-Wert (10 %ig in Wasser) | 8,1 |
| Neutralisationsgrad | 105 % |
| Mittlere Teilchengröße | 110 nm |
| Kosolvens: | 7,7 Gew.-% |

### Beispiel 11:

### Polyisocyanatvernetzer

In einem 6 1-Reaktionsgefäß mit Rühr-, Kühl- und Heizvorrichtung wurden nacheinander 3500 g Bayhydur® XP 2570 (Bayer AG, Leverkusen) und 1500 g Desmodur® XP 2410 (Bayer AG, Leverkusen) eingewogen und bei 30°C 60 Minuten homogenisiert. Anschließend wurden 37 g Tinuvin® 384-2 (Ciba, Basel) und 24 g Tinuvin® 292 (Ciba, Basel) zugegeben und weitere 30 Minuten homogenisiert. Es wurde eine hydrophile Polyisocyanatmischung mit einem Isocyanatgehalt von 20, 1 % erhalten.

### Anwendungsbeispiel 12

Komponente A wird mit dem Additiv Byk® 347 in der angegebenen Menge vermischt und mit Wasser verdünnt.

Komponente B wird vor der Applikation in Komponente A durch einen Düsenstrahldispergator gemäß EP-A-0 685 544 mit einer 0,4 mm großen Lochdüse bei 50 bar dispergiert. Die Applikation des vermischten 2K-Wasserklarlackes erfolgte mittels einer handelsüblichen Spritzpistole auf ein Aluminiumblech (Kratzfestigkeit) bzw. auf ein Stahlblech (Chemikalienbeständigkeit), das mit einer wässrigen Füllerschicht und einer wässrigen schwarzen, für Autoerstlackierung üblichen Basislackschicht vorbeschichtet war. Nach der Applikation werden die Bleche 5 Minuten bei Raumtemperatur und 10 Minuten bei 80°C abgelüftet, danach 30 Minuten bei 130°C getrocknet. Die Trockenschichtdicke des Klarlackes beträgt ca. 40 µm.

**Tabelle1**

| **Beispiel 12** | **a** | **b** | **c** | **d** | **e** |
|---|---|---|---|---|---|
| **Komponente A** | **Gew.-Tle.** | **Gew.-Tle.** | **Gew.-Tle.** | **Gew.-Tle.** | **Gew.-Tle.** |
| Beispiel 10 (Vergleich) | 411,9 | | | | |
| Beispiel 9 (Vergleich) | | | | | 339,9 |
| Beispiel 5 | | 356,4 | | | |
| Beispiel 6 | | | 372,1 | | |
| Beispiel 7 | | | | 370,4 | |
| Byk® 347 | 2,3 | 2,2 | 2,2 | 2,2 | 2,3 |
| Wasser | 64,4 | 114,0 | 98,3 | 100,0 | 114,9 |
| | | | | | |

| **Komponente B** | | | | | |
|---|---|---|---|---|---|
| Beispiel 11 | 119,5 | 125,6 | 125,6 | 125,6 | 141,1 |
| | | | | | |

| **Kratzfestigkeit nach 17 h** | **%** | **%** | **%** | **%** | **%** |
|---|---|---|---|---|---|
| Restglanz | 45 | 84 | 83 | 82 | 58 |
| Restglanz nach reflow | 62 | 93 | 93 | 92 | 72 |

| **Chem.beständigkeit** | **°C** | **°C** | **°C** | **°C** | **°C** |
|---|---|---|---|---|---|
| dest. Wasser | 36 | 46 | >68 | >68 | 36 |
| 1%ige NaOH | 40 | 41 | 44 | 41 | 37 |
| 1%ige H₂SO₄ | 38 | 37 | 38 | 39 | 36 |

### Kratzfestigkeit

Die Kratzfestigkeitsprüfung der hergestellten Klarlacke erfolgte gemäß DIN 55668.

Der relative Restglanz in % gibt wider, wie hoch der Glanzgrad [20°] nach Verkratzung gemäß DIN 5668 im Vergleich zum Glanzgrad vor Verkratzung liegt. Je höher dieser Wert ist, desto besser ist die Kratzfestigkeit.

### Chemikalienbeständigkeit

Die Chemikalienbeständigkeit wird in °C Einheiten angegeben. Dazu wird die Klarlackbeschichtung mit destilliertem Wasser bzw. 1%-iger Natronlauge bzw. 1%-iger Schwefelsäure beträufelt und in einem Gradientenofen getempert. Die Temperatur bei der erstmals sichtbare Schädigungen der Klarlackbeschichtung auftreten wird ermittelt. Je höher diese Temperatur liegt, desto beständiger ist Klarlackbeschichtung.

Das Beispiel zeigt deutlich, dass die erfindungsgemäßen Copolymerisatdispersionen Lacke mit wesentlich besserer Kratzbeständigkeit (Restglanz nach reflow > 90%) bei sehr guter Chemikalienbeständigkeit haben im Vergleich zu den Produkten des Standes der Technik.

## Patentansprüche

1. Wässrige Copolymerisatdispersionen enthaltend
A) ein oder mehrere hydroxyfunktionelle Copolymerisate aufgebaut aus
a) OH-gruppenfreie (Meth)acrylsäureester und/oder Vinylaromaten,
b) hydroxyfunktionelle (Meth)acrylsäureester,
c) ionischen und/oder potentiell ionischen, zur radikalischen Copolymerisation befähigten Monomeren sowie
d) gegebenenfalls weiteren, von den Verbindungen der Komponenten a) - c) verschiedenen zur radikalischen Copolymerisation befähigten Monomeren und
B) mindestens ein hydroxyfunktionelles Polycarbonatpolyol als Reaktivverdünner.

2. Wässrige Copolymerisatdispersionen gemäß Anspruch 1, **dadurch gekennzeichnet, dass** die hydroxyfunktionellen Polycarbonatpolyole B) eine mittlere Hydroxylfunktionalität von 1,6 bis 6 und ein zahlenmittleres Molekulargewicht von 240 bis 5000 Da aufweisen.

3. Wässrige Copolymerisatdispersionen gemäß Anspruch 1, **dadurch gekennzeichnet, dass** die hydroxyfunktionellen Polycarbonatpolyole B) auf 1,4-Butandiol, 1,6-Hexandiol. 3-Methyl-1,5-pentandiol oder deren Gemische basieren.

4. Wässrige Copolymerisatdispersionen gemäß Anspruch 1, **dadurch gekennzeichnet, dass** die hydroxyfunktionellen Polycarbonatpolyole B) eine mittlere Hydroxylfunktionalität von 1,9 bis 2,05 aufweisen.

5. Verfahren zur Herstellung der wässrigen Copolymerisatdispersionen gemäß Anspruch 1, **dadurch gekennzeichnet, dass** mindestens ein hydroxyfunktionelles Polycarbonatpolyol als Reaktivverdünner B) vorgelegt wird und eine oder mehrere Monomermischungen enthaltend
a) OH-gruppenfreie (Meth)acrylsäureester und/oder Vinylaromaten,
b) hydroxyfunktionelle (Meth)acrylsäureester,
c) ionische und/oder potentiell ionische, zur radikalischen Copolymerisation befähigte Monomere sowie
d) gegebenenfalls weitere, von den Verbindungen der Komponenten a) - c) verschiedene zur radikalischen Copolymerisation befähigte Monomere
radikalisch polymerisiert werden und das so erhaltene Copolymerisat anschließend vor oder nach Zugabe eines Neutralisationsmittels in Wasser dispergiert wird.

6. Verfahren zur Herstellung der wässrigen Copolymerisatdispersionen gemäß Anspruch 1, **dadurch gekennzeichnet, dass** in einem ersten Schritt (I) ein hydroxyfunktionelles Copolymerisat mit einer OH-Zahl von 12 bis 200 mg KOH/g Feststoff und einer Säurezahl von 0 bis 50 mg KOH/g Feststoff hergestellt wird und in einem anschließenden Schritt (II) in der aus Schritt (I) erhaltenen Reaktionsmischung ein weiteres Polymerisat aus Monomeren der Komponenten a) - d) hergestellt wird, wobei dieses Polymerisat eine OH-Zahl von 20 bis 200 mg KOH/g Feststoff und eine Säurezahl von 50 bis 200 mg KOH/g Feststoff aufweist und wobei die Monomermengen der beiden Polymerisatherstellungen so zu wählen sind, dass das Massenverhältnis des Polymerisats aus Schritt (I) zu dem aus Schritt (II) 10:1 bis 1:2 beträgt.

7. Wässrige Beschichtungsmittel enthaltend
i) ein oder mehrere wässrige Copolymerisatdispersionen gemäß Anspruch 1 sowie
ii) mindestens einen OH-gruppenreaktiven Vernetzer.

8. Verfahren zur Herstellung von Beschichtungen, **dadurch gekennzeichnet, dass** auf ein Substrat ein Beschichtungsmittel, enthaltend die Copolymerisatdispersionen gemäß Anspruch 1, appliziert und anschließend ausgehärtet wird.

9. Beschichtungen aufgebaut aus einem Substrat und mindestens einer Beschichtung, erhältlich gemäß Anspruch 8.

10. Verwendung der wässrigen Copolymerisatdispersionen gemäß Anspruch 1 zur Herstellung kratzfester Lacke und Beschichtungen.

11. Verwendung der wässrigen Copolymerisatdispersionen gemäß Anspruch 1 zur Herstellung wässriger Klarlacke für die Automobilerstlackierung.

## Claims

1. Aqueous copolymer dispersions containing
A) one or more hydroxy-functional copolymers built up from
a) OH group-free (meth)acrylic esters and/or vinyl aromatics,
b) hydroxy-functional (meth)acrylic esters,
c) ionic and/or potentially ionic monomers capable of free-radical copolymerisation, and
d) optionally additional monomers other than the compounds of components a) - c) that are capable of free-radical copolymerisation, and
B) at least one hydroxy-functional polycarbonate polyol as reactive diluent.

2. The aqueous copolymer dispersions according to claim 1, **characterised in that** the hydroxy-functional polycarbonate polyols B) have an average hydroxyl functionality of 1.6 to 6 and a number-average molecular weight of 240 to 5000 Da.

3. The aqueous copolymer dispersions according to claim 1, **characterised in that** the hydroxy-functional polycarbonate polyols B) are based on 1,4-butanediol, 1,6-hexanediol, 3-methyl-1,5-pentanediol or mixtures thereof.

4. The aqueous copolymer dispersions according to claim 1, **characterised in that** the hydroxy-functional polycarbonate polyols B) have an average hydroxyl functionality of 1.9 to 2.05.

5. A process for the production of the aqueous copolymer dispersions according to claim 1, **characterised in that** at least one hydroxy-functional polycarbonate polyol is initially charged as reactive diluent B) and one or more monomer mixtures containing
a) OH group-free (meth)acrylic esters and/or vinyl aromatics,
b) hydroxy-functional (meth)acrylic esters,
c) ionic and/or potentially ionic monomers capable of free-radical copolymerisation, and
d) optionally additional monomers other than the compounds of components a) - c) that are capable of free-radical copolymerisation
undergo free-radical polymerisation and the copolymer thus obtained is subsequently dispersed in water before or after the addition of a neutralising agent.

6. A process for the production of the aqueous copolymer dispersions according to claim 1, **characterised in that**, in a first step (I), a hydroxy-functional copolymer having an OH value of 12 to 200 mg KOH/g solids and an acid value of 0 to 50 mg KOH/g solids is produced and, in a subsequent step (II), in the reaction mixture obtained from step (I), another polymer is produced from monomers of components a) - d), this polymer having an OH value of 20 to 200 mg KOH/g solids and an acid value of 50 to 200 mg KOH/g solids, and the monomer amounts in the two polymer productions being selected such that the weight ratio of the polymer from step (I) to that from step (II) is 10:1 to 1:2.

7. Aqueous coating compositions containing
i) one or more aqueous copolymer dispersions according to claim 1 and
ii) at least one OH group-reactive crosslinker.

8. A process for the production of coatings, **characterised in that** a coating composition containing the copolymer dispersions according to claim 1 is applied to a substrate and subsequently cured.

9. Coatings built up from a substrate and at least one coating obtainable according to claim 8.

10. Use of the aqueous copolymer dispersions according to claim 1 for the production of scratch-resistant lacquers and coatings.

11. Use of the aqueous copolymer dispersions according to claim 1 for the production of aqueous clear lacquers for automotive OEM finishing.

## Revendications

1. Dispersions aqueuses de copolymères contenant
A) un ou plusieurs copolymères hydroxy-fonctionnels constitués à partir de
a) des esters d'acide (méth)acrylique et/ou des composés aromatiques vinyliques sans groupes OH,
b) des esters d'acide (méth)acrylique hydroxy-fonctionnels,
c) des monomères ioniques et/ou potentiellement ioniques, capables de copolymérisation radicalaire ainsi que
d) éventuellement d'autres monomères capables de copolymérisation radicalaire, différents des composés des composants a) - c) et
B) au moins un polycarbonatepolyol hydroxy-fonctionnel comme diluant réactif.

2. Dispersions aqueuses de copolymères selon la revendication 1, **caractérisées en ce que** les polycarbonatepolyols hydroxy-fonctionnels B) présentent une fonctionnalité hydroxyle moyenne de 1,6 à 6 et une masse moléculaire moyenne en nombre de 240 à 5 000 Da.

3. Dispersions aqueuses de copolymères selon la revendication 1, **caractérisées en ce que** les polycarbonatepolyols hydroxy-fonctionnels B) sont à base de 1,4-butanediol, 1,6-hexanediol, 3-méthyl-1,5-pentanediol ou de leurs mélanges.

4. Dispersions aqueuses de copolymères selon la revendication 1, **caractérisées en ce que** les polycarbonatepolyols hydroxy-fonctionnels B) présentent une fonctionnalité hydroxyle moyenne de 1,9 à 2,05.

5. Procédé pour produire les dispersions aqueuses de copolymères selon la revendication 1, **caractérisé en ce qu'**au moins un polycarbonatepolyol hydroxy-fonctionnel est disposé au préalable comme diluant réactif B) et un ou plusieurs mélanges de monomères contenant
a) des esters d'acide (méth)acrylique et/ou des composés aromatiques vinyliques sans groupes OH,
b) des esters d'acide (méth)acrylique hydroxy-fonctionnels,
c) des monomères ioniques et/ou potentiellement ioniques, capables de copolymérisation radicalaire ainsi que
d) éventuellement d'autres monomères capables de copolymérisation radicalaire, différents des composés des composants a) - c)
sont polymérisés par polymérisation radicalaire et le copolymère ainsi obtenu est ensuite dispersé dans l'eau avant ou après addition d'un agent de neutralisation.

6. Procédé pour produire les dispersions aqueuses de copolymères selon la revendication 1, **caractérisé en ce que**, dans une première étape (I), un copolymère hydroxy-fonctionnel ayant un indice OH de 12 à 200 mg de KOH/g de solide et un indice d'acide de 0 à 50 mg de KOH/g de solide est produit et, dans une étape consécutive (II), un autre polymère constitué par des monomères des composants a) - d) est produit dans le mélange réactionnel obtenu à partir de l'étape (I), où ce polymère présente un indice OH de 20 à 200 mg de KOH/g de solide et un indice d'acide de 50 à 200 mg de KOH/g de solide et où les quantités de monomères des deux productions de polymères doivent être choisies de telle manière que le rapport en masse du polymère provenant de l'étape (I) à celui provenant de l'étape (II) est 10 : 1 à 1 : 2.

7. Agents de revêtement aqueux contenant
i) une ou plusieurs dispersions aqueuses de copolymères selon la revendication 1 ainsi que
ii) au moins un réticulant réactif avec les groupes OH.

8. Procédé pour produire des revêtements, **caractérisé en ce qu'**un agent de revêtement contenant les dispersions de copolymères selon la revendication 1 est appliqué sur un substrat puis durci.

9. Revêtements constitués par un substrat et au moins un revêtement pouvant être obtenu selon la revendication 8.

10. Utilisation des dispersions aqueuses de copolymères selon la revendication 1 pour la production de peintures et revêtements résistant aux rayures.

11. Utilisation des dispersions aqueuses de copolymères selon la revendication 1 pour la production de peintures claires aqueuses pour la première peinture des véhicules automobiles.
